# FASCICULE DE BREVET EUROPEEN

(11) **EP 1 040 391 B1**
(45) Date de publication et mention de la délivrance du brevet: **10.12.2008**
(21) Numéro de dépôt: 98965848.9
(22) Date de dépôt: 17.12.1998
(51) Int. Cl.: G04G 9/00

(54) **ENSEMBLE D'AFFICHAGE COMPRENANT DEUX DISPOSITIFS D'AFFICHAGE SUPERPOSES**
ANZEIGEEINHEIT MIT ZWEI ÜBEREINANDER LIEGENDEN ANZEIGEVORRICHTUNGEN
DISPLAY ASSEMBLY COMPRISING TWO SUPERPOSED DISPLAY DEVICES

(30) Priorité: 19.12.1997 CH 293297; 22.12.1997 EP 97122651
(43) Date de publication de la demande: 04.10.2000
(73) Titulaire: ASULAB S.A., 2074 Marin (CH)
(72) Inventeur: BASTURK, Naci, CH-2073 Enges (CH); GRUPP, Joachim, CH-2003 Neuchâtel (CH); GILOMEN, Beat, CH-2540 Grenchen (CH)
(74) Mandataire: Ravenel, Thierry Gérard Louis
(86) Numéro de dépôt international: PCT/EP1998/008280
(87) Numéro de publication internationale: WO 1999/032945

(56) Documents cités:
- GB-A- 2 291 723
- US-A- 4 088 400
- US-A- 4 241 339
- US-A- 4 247 930
- US-A- 4 488 818
- US-A- 5 479 278

## Description

La présente invention concerne un ensemble d'affichage comprenant au moins deux dispositifs d'affichage superposés et plus particulièrement un tel ensemble comportant des moyens permettant de faire apparaître sélectivement à un observateur un des dispositifs d'affichage à l'exclusion de l'autre.

La présente invention concerne également une pièce d'horlogerie comprenant un ensemble d'affichage de ce type et plus particulièrement un tel ensemble d'affichage dans lequel un dispositif d'affichage analogique est combiné à un dispositif d'affichage numérique.

Le brevet FR 2 426 282 décrit déjà une montre électronique comprenant une boîte dans laquelle sont ménagés à la fois un dispositif d'affichage analogique et un dispositif d'affichage numérique. Le dispositif d'affichage analogique comprend une aiguille des heures et une aiguille des minutes qui se déplacent de façon classique au-dessus d'un cadran, tandis que le dispositif d'affichage numérique comprend une cellule à cristaux liquides transparente disposée devant le dispositif d'affichage analogique qu'elle recouvre complètement. Dans ce brevet, cette cellule forme la glace de la montre. Le dispositif d'affichage numérique permet l'affichage de caractères alphanumériques, par exemple le jour de la semaine et le quantième en foncé sur fond clair ou le cas échéant en clair sur fond sombre, le cadran et les aiguilles du dispositif analogique étant toujours visibles à travers le dispositif d'affichage numérique. Lorsqu'aucune information n'est affichée par le dispositif d'affichage numérique, la montre présente donc l'aspect d'une montre classique, c'est-à-dire que les aiguilles et le cadran sont visibles complètement à travers le dispositif d'affichage numérique transparent formant la glace. En revanche, lorsque des informations sont affichées par le dispositif numérique, ces informations viennent s'afficher en superposition de celles du dispositif d'affichage analogique. Cela rend par conséquent la lecture des informations affichées par la cellule peu aisée et ce d'autant plus que la densité d'informations affichées par cette cellule est grande. La tendance actuelle étant à la réalisation de montres multifonctionnelles du type agenda, pager, etc. dans lesquelles le dispositif d'affichage numérique doit afficher simultanément un grand nombre d'informations, ce problème est d'autant plus critique.

La présente invention a pour but de remédier aux inconvénients de l'art antérieur susmentionné en fournissant un ensemble d'affichage comportant au moins deux dispositifs d'affichage superposés, respectivement inférieur et supérieur, dans lequel il est possible de faire apparaître à un observateur sélectivement des informations affichées par un des dispositifs d'affichage à l'exclusion de celles affichées par l'autre, et ceci avec une bonne lisibilité des informations affichées par le dispositif d'affichage en question.

La présente invention a également pour but de fournir un ensemble d'affichage dans lequel le dispositif d'affichage supérieur est un dispositif à cristaux liquides présentant un contraste d'affichage amélioré.

La présente invention a également pour but de fournir une pièce d'horlogerie équipée d'un tel ensemble d'affichage ayant un aspect esthétique amélioré.

A cet effet, l'invention a pour objet un ensemble d'affichage comprenant deux dispositifs d'affichage superposés respectivement supérieur et inférieur, caractérisé en ce que le dispositif d'affichage supérieur comprend une structure double formée d'une cellule d'affichage disposée au-dessus d'une valve optique, ladite structure double étant agencée de façon que ladite cellule et ladite valve soient transparentes dans un premier état pour rendre visible le dispositif d'affichage inférieur, et que la cellule affiche une information et que la valve soit opaque et réflective et masque au moins partiellement le dispositif d'affichage inférieur dans un deuxième état, des moyens de commande fournissant une tension de commande pour faire passer la cellule d'affichage et la valve optique du premier état au deuxième état et inversement.

Grâce à ces caractéristiques, il est possible d'utiliser sélectivement soit le dispositif d'affichage inférieur, soit le dispositif d'affichage supérieur, sans que l'un n'altère la qualité et la lisibilité de l'affichage de l'autre. En particulier, si l'on choisit d'utiliser le dispositif d'affichage inférieur, le dispositif d'affichage supérieur peut être commuté dans son premier état dans lequel il est totalement transparent, de sorte que les informations affichées par le dispositif d'affichage inférieur sont parfaitement visibles. Si l'on choisit en revanche d'utiliser l'affichage supérieur, la valve optique est alors commutée dans le deuxième état dans lequel elle devient opaque et réflective pour masquer totalement le dispositif d'affichage inférieur, tandis que la cellule du dispositif d'affichage supérieur peut afficher les informations désirées. Ces informations peuvent être affichées en clair sur fond sombre ou en foncé sur fond clair en fonction du type de cellule d'affichage utilisée. De cette manière, toute gêne dans la lecture des informations résultant de la superposition des dispositifs d'affichage inférieur et supérieur est éliminée, ce qui améliore notamment la lisibilité des informations affichées par le dispositif d'affichage choisi.

Selon un premier mode de réalisation, la valve optique comprend une cellule du type nématique en hélice munie d'un polariseur placé devant la cellule, et d'une lame quart d'onde associée à un film cholestérique placés successivement derrière la cellule, la valve optique ou le dispositif d'affichage inférieur comprenant en outre une deuxième lame quart d'onde placée derrière le film cholestérique et le dispositif d'affichage inférieur comprenant un réflecteur métallique placé derrière ladite deuxième lame quart d'onde.

Le passage de la lumière à travers la deuxième lame quart d'onde permet de transformer la lumière polarisée circulaire issue du film cholestérique en lumière polarisée linéaire pour laquelle le réflecteur métallique est plus efficace. Cette structure permet d'homogénéiser la lumière réfléchie par l'ensemble d'affichage et de rendre la couleur de ce dernier moins dépendante de la longueur d'onde de la lumière.

Selon un deuxième mode de réalisation, la valve optique comprend une cellule du type nématique en hélice munie d'un polariseur placé devant la cellule, et d'une lame quart d'onde associée à un film cholestérique ayant un premier sens d'hélice, placés successivement derrière la cellule, le dispositif d'affichage inférieur comprenant un miroir cholestérique ayant un sens d'hélice inverse à celui dudit film cholestérique.

Grâce à cette structure, la totalité de la lumière traversant le film cholestérique, et représentant la moitié de la lumière incidente, est réfléchie par le miroir cholestérique, ce qui permet d'améliorer la brillance de l'ensemble d'affichage. Dans le cas d'une montre bracelet ou analogue, le miroir cholestérique peut avantageusement former le cadran de la montre. Un autre avantage de cette structure réside dans le fait que l'on peut choisir des miroirs cholestériques de différentes couleurs, ce qui permet de réaliser des ensembles d'affichage colorés.

Selon un troisième mode de réalisation, la valve optique comprend une cellule du type nématique en hélice munie d'un polariseur placé devant la cellule, et d'une lame quart d'onde associée à un film cholestérique placés successivement derrière la cellule, le dispositif d'affichage inférieur comprenant en outre une lame demi onde (λ/2) et un deuxième film cholestérique identique au premier.

Grâce à cette structure, on peut utiliser deux mêmes éléments optiques associés à la cellule d'affichage, ce qui représente un avantage du point de vue pratique.

Selon un mode de réalisation avantageux, la cellule d'affichage et la valve optique sont dans un état transparent en l'absence de tension appliquée par les moyens de commande. Ainsi, l'information affichée par le dispositif d'affichage inférieur est visible en permanence sans que le dispositif d'affichage supérieur consomme d'énergie. Ceci est particulièrement avantageux dans le cadre d'une application à un objet portable telle qu'une montre-bracelet.

D'autres caractéristiques et avantages de la présente invention apparaîtront dans la description suivante d'un mode de réalisation préféré, présenté à titre d'exemple non limitatif en référence aux dessins annexés, dans lesquels :
- la figure 1 est une vue en coupe d'une montre-bracelet équipée d'un ensemble d'affichage selon la présente invention, l'ensemble état commuté dans un premier état laissant apparaître le dispositif d'affichage inférieur;
- la figure 2 est une vue de dessus de la montre-bracelet représentée à la figure 1, l'ensemble d'affichage étant dans le même état de commutation qu'à la figure 1;
- les figures 3 et 4 sont des vues similaires respectivement à celles des figures 1 et 2, l'ensemble d'affichage étant commuté dans un deuxième état;
- la figure 5 est une vue de dessus d'une montre-bracelet dans un mode de commutation particulier de l'ensemble d'affichage selon l'invention;
- la figure 6 est une vue schématique d'un mode de réalisation de la valve optique;
- les figures 7 à 10 représentent des vues schématiques de différents modes de réalisation de l'ensemble d'affichage selon l'invention, et
- les figures 11a, 11b et 12a, 12b sont des vues schématiques de cellules d'affichage à cristaux liquides du type nématique en hélice.

La description de l'invention va être faite dans le cadre d'une application à une pièce d'horlogerie telle qu'une montre-bracelet. Il va toutefois de soi que l'invention n'est pas limitée à cette application et qu'elle pourra être avantageusement utilisée dans le cadre de toute autre application nécessitant l'affichage d'informations tels que des panneaux publicitaires, des instruments de mesure, etc.

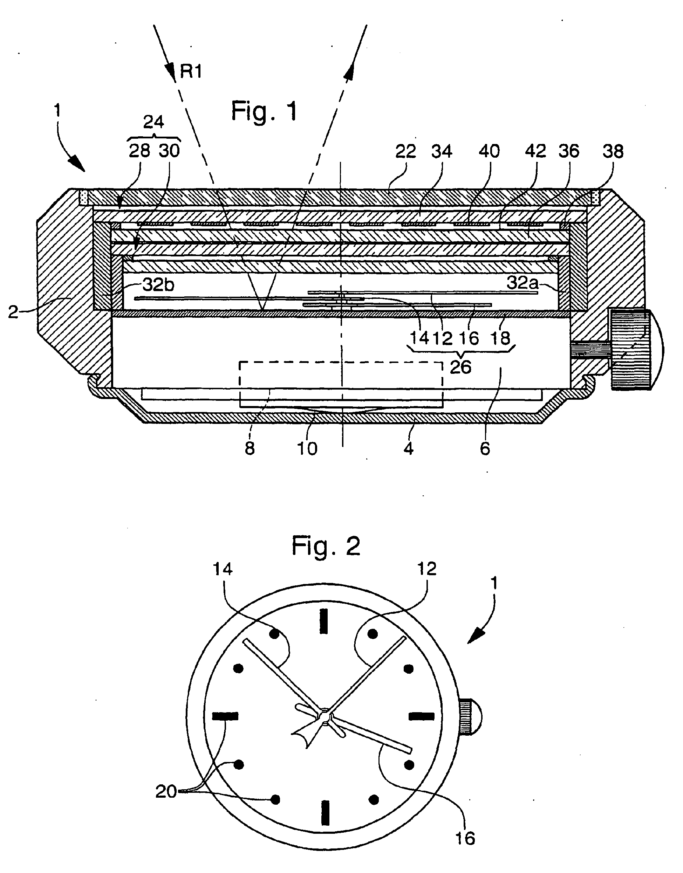

En se référant aux figures 1 à 4, on voit une pièce d'horlogerie du type montre-bracelet désignée par la référence générale 1. Cette montre 1 comprend classiquement une boîte 2 munie d'un fond 4 dans laquelle sont disposés un mouvement d'horlogerie électronique 6 et une pile 8 qui prend appui sur le fond 4 par l'intermédiaire d'un ressort de contact 10. Le mouvement 6 comprend des circuits électroniques garde-temps associés, via un circuit de commande à un dispositif d'entraînement (non représenté) d'une aiguille des secondes 12, d'une aiguille des minutes 14 et d'une aiguilles des heures 16 qui se déplacent au-dessus d'un cadran 18 qui porte des heures index 20 visibles sur la figure 2. La boîte 2 est également fermée de façon classique par une glace 22 recouvrant la totalité du cadran 18.

Selon l'invention, la montre 1 comprend en outre un ensemble d'affichage comprenant deux dispositifs d'affichage superposés respectivement supérieur 24 et inférieur 26. Dans l'exemple représenté, le dispositif d'affichage inférieur 26 comprend des moyens d'affichage de grandeurs temporelles, en particulier des moyens d'affichage analogiques de l'heure formés par les aiguilles 12, 14, 16 et le cadran 18.

Il va de soi que ce dispositif d'affichage inférieur 26 pourrait être formé par un dispositif d'affichage numérique quelconque, par exemple du type à cristaux liquides. Ce dispositif d'affichage 26 pourrait également comprendre une combinaison de moyens d'affichage analogiques et numériques tels que la combinaison décrite dans le brevet EP-B-0 078 237 au nom de la demanderesse ou encore un élément décoratif, par exemple une image, figure, etc.

Selon l'invention, le dispositif d'affichage supérieur 24 comprend une double structure formée d'une cellule d'affichage 28 disposée au dessus d'une valve optique 30, ce dispositif d'affichage 24 s'étendant entre le dispositif d'affichage inférieur 26 et la glace 22. Dans l'exemple représenté, ce dispositif d'affichage supérieur 24 recouvre la totalité de la surface du cadran 18.

Selon l'invention, le dispositif d'affichage supérieur 24 est agencé d'une part de façon que la cellule d'affichage 28, disposée entre la glace 22 et la valve optique 30, ainsi que cette dernière soient transparentes dans un premier état de commutation de la cellule 28 et de la valve 30, de façon à rendre visibles les informations affichées par le dispositif d'affichage inférieur 26, à savoir les aiguilles 12, 14 et 16 et le cadran 18 dans l'exemple représenté. Une telle configuration de l'ensemble d'affichage de l'invention est représentée à la figure 2.

D'autre part, le dispositif d'affichage supérieur 24 est agencé de façon que la cellule d'affichage 28 affiche une information, par exemple du type alphanumérique, et que la valve optique 30 soit opaque et masque au moins partiellement le dispositif d'affichage inférieur 26 dans un deuxième état de commutation.

La commutation de la cellule d'affichage 28 et de la valve optique 30 du premier état au deuxième état et inversement est réalisée par des moyens de commande (non représentés) intégrés au mouvement 6, ces moyens de commande étant reliés à la cellule 28 et à la valve 30 au moyen de connecteurs classiques 32a, 32b, pour leur fournir une tension de commande. Dans l'exemple représenté ces connecteurs 32a et 32b forment également un rehaut disposé entre le bord supérieur du cadran 18 et le bord inférieur de la valve optique 30 respectivement de la cellule 28.

Selon un mode de réalisation particulier de l'invention représenté aux figures 1 à 4, la cellule 28 est une cellule d'affichage du type à cristaux liquides. La cellule comprend un substrat avant 34 transparent un substrat arrière 36 transparent, un cadre de scellement 38 formant des moyens d'espacement et de fermeture et délimitant avec les substrats 34 et 36 une cavité fermée dans laquelle se trouve une couche de cristaux liquides. Les faces en regard des substrats 34 et 36 comprennent des électrodes 40, 42 transparentes, réalisées par exemple en oxyde d'indium/étain. Dans l'exemple illustré, le substrat avant 34 porte des électrodes configurées en digits formés chacun de segments permettant d'afficher des caractères alphanumériques, tandis que le substrat arrière 36 porte une électrode s'étendant sur toute sa surface. Les électrodes 40 et 42 sont reliées au connecteur 32a par l'intermédiaire de plages de contact 44 situées à l'extérieur de la cavité.

Lorsque l'on applique ou que l'on supprime une tension entre l'électrode 42 et certaines des électrodes 40, on fait passer les cristaux liquides se trouvant entre ces électrodes 40, 42 alternativement d'un état absorbant à un état transparent ou inversement, selon le type de cristaux liquides en question et/ou la présence et la disposition de polariseurs associés à la cellule. Il est ainsi possible d'afficher des informations en clair sur fond sombre ou en sombre sur fond clair.

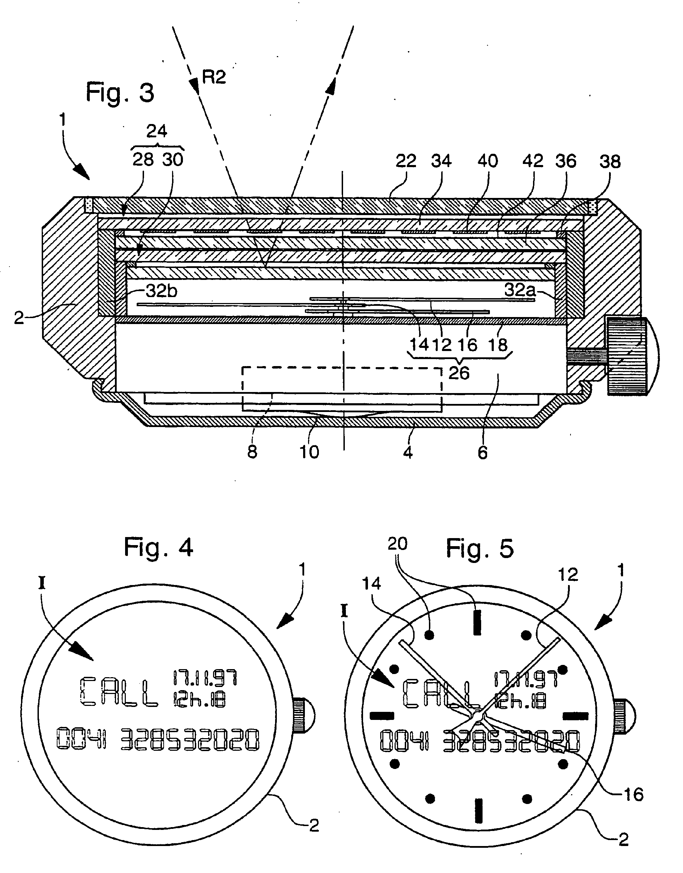

Dans l'exemple représenté, la cellule d'affichage 28 est une cellule à cristaux liquides de type nématique en hélice dont les surfaces extérieures respectives des substrats 34 et 36 sont munies de polariseurs (non représentés) à orientations croisées. Ainsi, la cellule 28 est totalement transparente (figures 1 et 2), c'est-à-dire dans le premier état de commutation, lorsqu'aucune tension n'est appliquée aux bornes de ses électrodes 40, 42 (état non commuté), et est absorbante ou diffusante (figures 3 et 4), c'est-à-dire dans le deuxième état de commutation, lorsqu'une tension est appliquée aux bornes de ses électrodes 40, 42 (état commuté).

Selon une variante de réalisation non représentée, l'orientation des polariseurs est parallèle, de sorte que la cellule est transparente dans son état commuté et absorbante dans son état non commuté.

Il va de soi que la cellule 28 peut être d'un autre type dès lors que dans un premier état de commutation, la cellule est transparente, et que dans un deuxième état de commutation, la cellule 28 est absorbante ou diffusante.

En effet, on pourra notamment choisir des cellules de type STN, Guest-Host (GH), à biréfringence contrôlée électriquement (BCE), à gel nématique et texture cholestérique, à cristaux liquides dispersés dans un polymère ferroélectrique, à diffusion dynamique (Dynamic Scattering).

La structure et le fonctionnement de ces types de cellules sont bien connus de l'homme du métier et ne seront pas décrits en détail dans cette description.

Pour une description complète de la structure et du fonctionnement d'une cellule de type STN, on se référera par exemple au brevet EP-A-0 131 216.

Pour une description complète de la structure et du fonctionnement d'une cellule de type GH, on se référera par exemple pour une cellule GH à contraste positif, c'est-à-dire qui affiche en foncé sur fond clair, au brevet US 4,257,682 et pour une cellule GH à contraste négatif, c'est-à-dire qui affiche en clair sur fond foncé, à la publication de G.H. Heilmeier et L.A. Zanomi intitulée "Guest-Host Interaction in Nematic Liquid Crystals a New Electrooptical Effect" publiée dans Appl. Phys. Lett. vol. 13, No 3, pages 91-92, année 1968.

Pour une description complète de la structure et du fonctionnement d'une cellule de type BCE, on se référera par exemple au volume 3 de l'ouvrage intitulé "Liquid Crystals Applications and Uses" édité par B. Bahadur aux pages 254-300.

Pour une description complète de la structure et du fonctionnement d'une cellule de type à gel nématique et texture cholestérique, on se référera par exemple aux brevets US 5,188,760 et EP-A-0 451 905.

Pour une description complète de la structure et du fonctionnement d'une cellule de type à cristaux liquides dispersés dans un polymère, plus connue sous sa dénomination anglo-saxonne "Polymer Dispersed Liquid Cristal" (PDLC), on se référera par exemple au brevet US 4,435,047.

On notera à ce propos que l'on choisira une cellule du type PDLC inverse si l'on souhaite obtenir une cellule transparente dans l'état non commuté, et opaque et réfléchissante dans l'état commuté.

Pour une description complète de la structure et du fonctionnement d'une cellule de type à diffusion dynamique, on se référera par exemple au volume 1 de l'ouvrage intitulé "Liquid Crystals Applications and Uses" édité par B. Bahadur aux pages 196-227.

Pour une description complète de la structure et du fonctionnement d'une cellule de type ferroélectrique, on se référera par exemple au volume 1 de l'ouvrage intitulé "Liquid Crystals Applications and Uses" édité par B. Bahadur aux pages 307-356.

Tous les types de cellules 28 décrits ci-dessus peuvent bien entendu être adressés passivement par un réseau d'électrodes matriciel ou encore adressés activement par des éléments non linéaires tels que des transistors en couches minces MIM, ou des diodes.

Dans l'exemple représenté, la valve optique 30 est formée d'une cellule électrolytique qui est transparente dans l'état non commuté (figures 1 et 2), et qui est opaque et réfléchissante dans l'état commuté (figures 3 et 4). Une telle valve 30 comprend une solution électrolytique d'un sel de métal dissous dans un solvant placé entre deux électrodes. Lorsque la valve 30 est dans un état commuté, le métal de la solution se dépose sur toute la surface de l'une des électrodes, et rend ainsi la valve 30 réfléchissante. Lorsque la valve 30 est dans un état non commuté, le métal se dissout à nouveau dans la solution, et la cellule redevient transparente. Une telle valve 30 est par exemple décrite dans la publication de J. Duchêne et al. intitulée "Electrolytic Display", publiée dans SID 1978 pages 34 à 37.

Bien entendu, selon une variante de réalisation, la valve optique 30 peut être formée d'une cellule électrocapillaire au mercure comprenant un film capillaire disposé entre deux substrats portant des électrodes, et qui, dans l'état commuté de la cellule, ne mouille pas la surface des substrats, de sorte que la cellule est transparente, et qui, dans l'état non commuté de la cellule, mouille la totalité de la surface des substrats pour la rendre réfléchissante. Une telle cellule est par exemple décrite dans le brevet US 4,583,824.

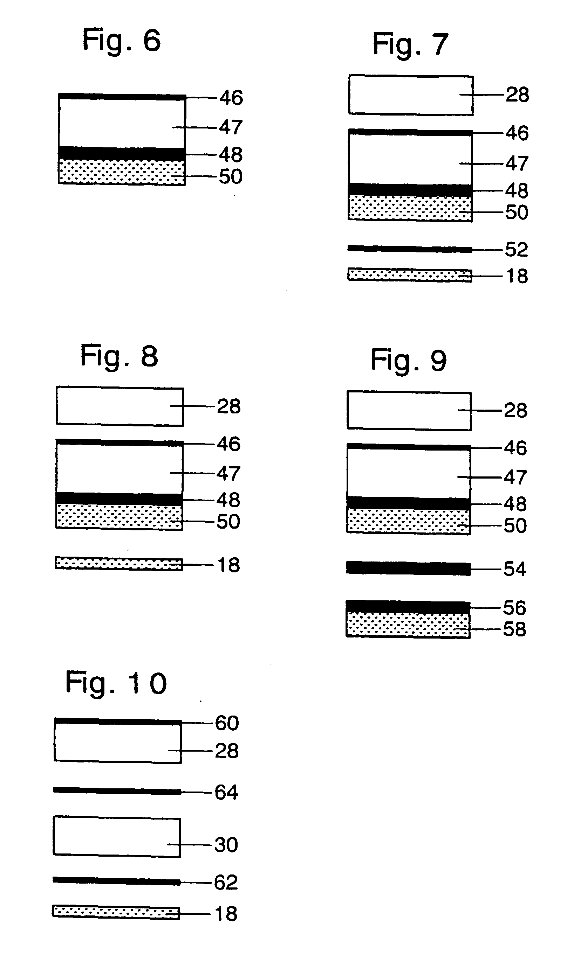

Selon encore une autre variante de réalisation représentée à la figure 6, la valve optique 30 peut être formée d'un réflecteur commutable comprenant, en partant du côté de la glace 22, un empilement formé d'un polariseur linéaire 46, d'une cellule à cristaux liquides 47 du type nématique en hélice (TN), d'une lame quart d'onde 48 et d'un film cholestérique 50 tel que le réflecteur décrit dans la publication de T. J. Scheffer intitulée "Twisted Nematic Display with Cholesteric Reflector" publiée dans J. Phys. Appl. Phy., Vol. 8, 1975. De préférence, le polariseur 46 est du type à efficacité de polarisation et transmission élevée par exemple tel que le polariseur commercialisé par la société Sanritsu, Japon sous la référence LLC₂5618SF.

Dans la suite de la description, les éléments identiques à ceux décrits en liaison avec la figure 1 sont désignés par les mêmes références numériques.

En se référant maintenant à la figure 7, on voit une première variante de réalisation de l'ensemble d'affichage de l'invention. Selon cette variante, le dispositif d'affichage supérieur 24 comprend en outre une deuxième lame quart d'onde 52 placée immédiatement derrière le film cholestérique 50, et le dispositif d'affichage inférieur 26 comprend un cadran 18 formant un réflecteur métallique. A titre d'exemple, la face visible du cadran 18 peut comprendre une couche métallique réfléchissante si le cadran 18 n'est pas réalisé en métal, ou cette face peut être polie si le cadran 18 est métallique. On notera qu'il est également possible d'intégrer la deuxième lame quart d'onde 52 directement sur le cadran 18.

En se référant maintenant à la figure 8, on voit une deuxième variante de réalisation de l'ensemble d'affichage de l'invention. Selon cette variante, le dispositif d'affichage inférieur 26 comprend un cadran 18 formant un miroir cholestérique ayant un sens d'hélice inverse de celui dudit film cholestérique 50 du dispositif d'affichage supérieur 24.

En se référant maintenant à la figure 9, on voit une troisième variante de réalisation de l'ensemble d'affichage de l'invention. Selon cette variante, le dispositif d'affichage inférieur 26 comprend en outre une deuxième et une troisième lames quart d'onde 54, 56 et un deuxième film cholestérique 58 remplaçant le cadran 18.

Selon une autre variante représentée à la figure 10, la cellule 28 peut comprendre du côté de la glace 22, un polariseur linéaire 60 et, du côté du cadran 18, un polariseur réflectif 62, associé ou non à un polariseur linéaire 64 placé devant lui à la place de la lame quart d'onde 48 et du film polariseur cholestérique 50.

De façon avantageuse, le polariseur réflectif peut être du type à µ-prismes tel que, par exemple le produit commercialisé sous le nom DBEF (Dual Brightness Enhancement Films) par la société 3M. D'autres films utilisés pour améliorer la luminance du système tels que les films BEF (Brightness Enhancement Films) produits par la société 3M peuvent être associés ou non au film DBEF cité précédemment. Le cas échéant, le polariseur réflectif décrit ci-dessus pourra être remplacé par un polariseur transflectif tel que par exemple le produit commercialisé sous le nom TDF par la société 3M. On pourra également intégrer la lame quart d'onde et le film cholestérique en un seul élément, par exemple tel que le produit TRANSMAX^{®} commercialisé par Merck.

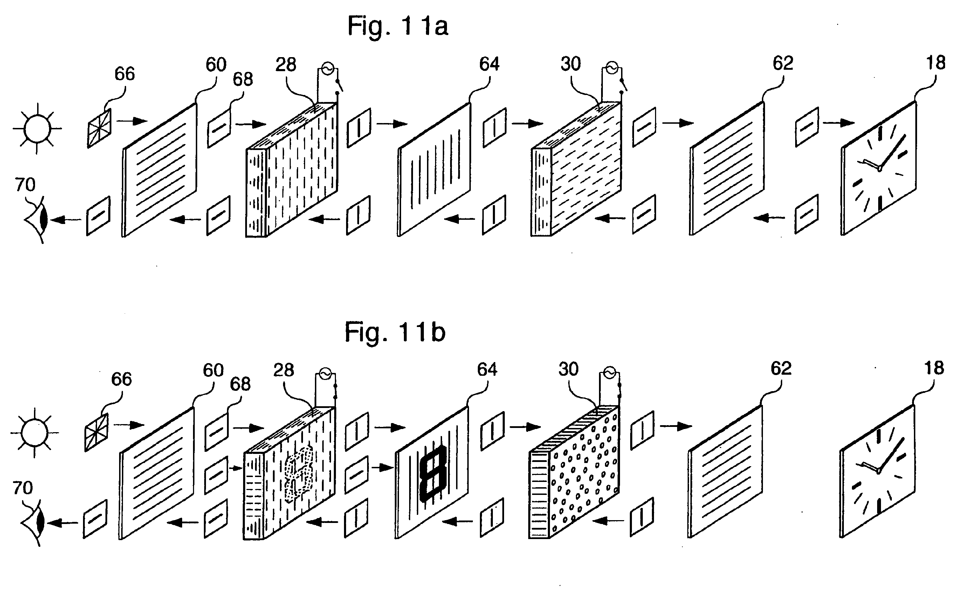

Dans un premier état représenté à la figure 11a, la cellule d'affichage 28 est formée d'une cellule à cristaux liquides du type nématique en hélice TN à anisotropie positive placée entre deux polariseurs linéaires 60, 64 croisés. De même, la valve optique 30 est une cellule TN à anisotropie positive associée à un polariseur réflectif 62 orienté de façon à ce que son axe de polarisation soit perpendiculaire à l'axe de polarisation du polariseur linéaire 64 placé devant lui. Ainsi, le cadran 18 est visible lorsque la cellule d'affichage 28 et la valve optique 30 sont dans l'état non commuté. En effet, comme on le voit sur la figure 11a, la lumière naturelle non polarisée, désignée par la référence numérique 66, est polarisée horizontalement par le premier polariseur linéaire 60. La direction de polarisation de la lumière, désignée par la référence 68, est ensuite tournée de 90° lors de son passage à travers la cellule d'affichage 28, puis passe sans modification à travers le polariseur linéaire 64. La direction de polarisation 68 de la lumière est ensuite à nouveau tournée de 90° lors de son passage à travers la valve optique 30, de sorte que cette composante de la lumière est transmise par le polariseur réflectif 62 jusqu'au cadran 18. La lumière suit le même chemin lors de son trajet retour, de sorte que le cadran 18 est visible pour un observateur 70. En revanche, lorsque la cellule 28 et la valve 30 sont dans l'état commuté (figure 11 b), le cadran 18 est masqué. En effet, dans ce deuxième état de commutation, la cellule 28 est absorbante dans ses régions commutées, c'est-à-dire dans les zones dans lesquelles les électrodes 40, 42 sont commutées, tandis que la valve 30 est totalement réfléchissante. Comme on le voit sur la figure 11b, la lumière polarisée horizontalement qui traverse la cellule 28 dans les zones commutées de cette dernière n'est pas modifiée, de sorte qu'elle est absorbée par le polariseur linéaire 64 dont l'axe de polarisation est vertical. De même, la direction de polarisation de la lumière qui traverse la cellule 28 en dehors de ses zones commutées n'est pas modifiée lors de son passage à travers la valve 30, de sorte qu'elle est totalement réfléchie par le polariseur réflectif 62. Les informations sont ainsi affichées en opaque sur fond réfléchissant, l'aspect de l'affichage étant déterminé par la couleur réfléchie par le polariseur réflectif 62. On voit également sur la figure 11b que l'adressage de la cellule 28 est normal, c'est-à-dire que les segments commutés sont ceux que l'on cherche à afficher effectivement. Selon une variante non représentée au dessin, l'adressage de la cellule d'affichage 28 peut être inverse, c'est-à-dire que tous les segments de ladite cellule 28 sont commutés, à l'exclusion de ceux que l'on cherche à afficher. Dans ce cas, les informations sont affichées en transparent sur fond opaque, l'aspect de l'affichage étant, ici aussi, déterminé par la couleur réfléchie par le polariseur réflectif 62 et la couleur du cadran 18.

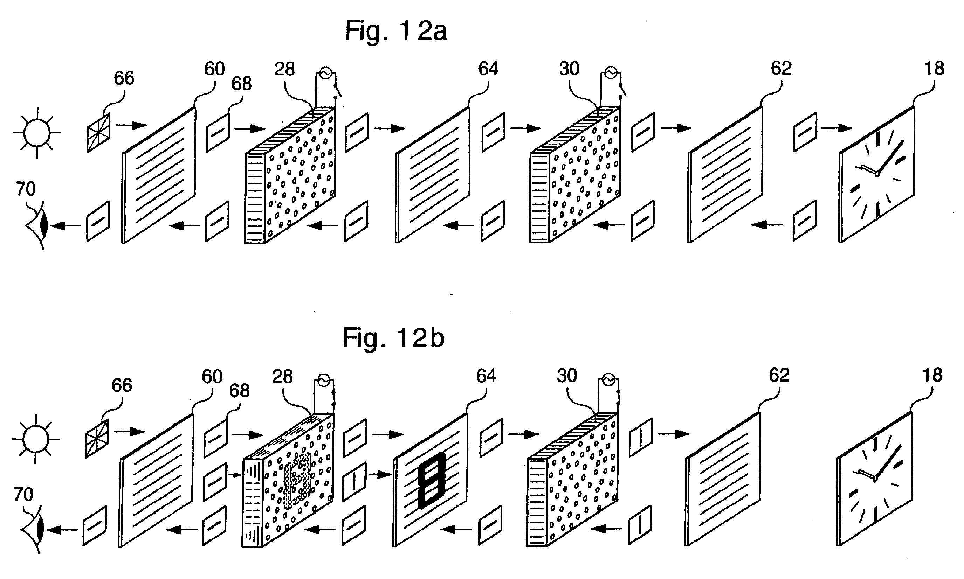

Dans un deuxième état représenté à la figure 12a, la cellule d'affichage 28 et la valve optique 30 sont formées chacune d'une cellule à cristaux liquides du type nématique en hélice à anisotropie négative. L'alignement des molécules de cristal liquide est donc homéotrope à l'état non commuté desdites cellules, de sorte que la cellule d'affichage 28 et la valve optique 30 sont sans effet sur la direction de polarisation de la lumière dans cet état. Les polariseurs linéaires 60, 64 et le polariseur réflectif 62 sont orientés de façon à avoir leurs axes de polarisation respectifs parallèles. En appliquant, pour la direction de polarisation de la lumière, un raisonnement analogue à celui développé en liaison avec les figures 11 a et 11 b, on comprendra que l'état non commuté de la cellule 28 et de la valve 30 est totalement transparent (figure 12a), de sorte que le cadran 18 est visible. En revanche, dans le deuxième état de commutation (figure 12b), la cellule 28 se comporte comme une cellule TN et est absorbante dans ses régions commutées, c'est-à-dire dans les zones dans lesquelles les électrodes 40 et 42 sont commutées, et la valve 30 est totalement réfléchissante. Le cadran 18 est ainsi masqué, et les informations apparaissent à l'observateur 70 en foncé sur fond réfléchissant, l'aspect de l'affichage étant déterminé par la couleur réfléchie par le polariseur réflectif 62. On voit, sur la figure 12b, que l'adressage de la cellule est normal, c'est-à-dire que les segments commutés sont ceux que l'on cherche à afficher. Selon une variante non représentée au dessin, l'adressage de la cellule peut aussi être inverse, c'est-à-dire que tous les segments, à l'exclusion de ceux que l'on cherche à afficher, sont commutés. Les informations sont alors affichées en transparent sur fond opaque, l'aspect de l'affichage étant déterminé par la couleur réfléchie par le polariseur réflectif 62.

Selon une autre variante, on peut choisir un film cholestérique 50 qui réfléchisse une longueur d'onde ou une partie du spectre visible correspondant à une couleur prédéterminée. On peut de cette façon choisir d'afficher les informations dans une couleur complémentaire à celle du cadran, et ainsi améliorer le contraste et l'esthétique de l'ensemble d'affichage.

On notera également à ce propos que, selon une autre variante, la cellule à cristaux liquides du type nématique en hélice TN décrite dans la publication de Scheffer peut être remplacée par un dispositif d'affichage en couleurs tel que ceux décrits dans le brevet EP-A-0 600 349.

Dans le cadre de l'invention, le réflecteur commutable est avantageusement transparent dans l'état non commuté, et réfléchissant dans l'état commuté.

Les valves optiques 30 qui viennent d'être décrites sont toutes transparentes dans l'état non commuté, et peuvent avantageusement être combinées à des cellules 28 qui sont également transparentes dans un état non commuté. Ainsi, dans le cadre de l'application à une pièce d'horlogerie 1, le dispositif d'affichage inférieur 26, à savoir les aiguilles 12, 14 et 16 et le cadran 18, peuvent être visibles en permanence avec une consommation d'énergie minimum, dans la mesure où seul le dispositif d'affichage inférieur 26 a besoin d'être alimenté, le dispositif d'affichage supérieur 24 n'étant alimenté que lorsque l'utilisateur souhaite lire une information délivrée par ce dispositif d'affichage 24.

Selon encore une variante de réalisation, la valve optique 30 peut être réalisée au moyen d'un film cholestérique commutable qui est transparent dans un état commuté, et opaque et réfléchissant dans un état non commuté. Un tel film cholestérique est par exemple décrit dans le brevet EP-A-0 643 121.

Dans le cas où la cellule 28 est du type diffusant à l'état commuté (cellule du type PDLC inverse, à gel nématique et à diffusion dynamique), c'est-à-dire lorsqu'elle affiche une information, la valve optique 30 peut être formée d'une cellule TN, STN, GH à contraste positif, BCE, ferroélectrique, du type PSCT (Polymer Stabilized Cholesteric Texture) ou encore tout autre cellule présentant un état transparent à l'état non commuté et opaque ou absorbant dans l'état commuté. Une cellule de type PSCT est décrite par exemple dans le brevet US 5,437,811.

L'ensemble d'affichage selon l'invention permet donc, en fonction de l'état de commutation et du type respectivement de la cellule 28 et de la valve optique 30, d'obtenir différentes configurations d'affichage.

En particulier, et en se référant au mode de réalisation de l'invention illustré aux figures 1 à 4 dans lequel la cellule 28 est formée d'une cellule TN à polariseurs croisés et la valve optique 30 est formée d'une cellule électrolytique, le dispositif d'affichage inférieur 26 est visible lorsque la cellule 28 et la valve 30 sont dans l'état non commuté. Dans cette configuration illustrée aux figures 1 et 2 la lumière, symbolisée par un rayon R1, traverse le dispositif d'affichage supérieur 24 et est totalement réfléchie sur le cadran 18 et les aiguilles 12, 14 et 16 pour traverser à nouveau le dispositif 24 sans être modifiée, aux pertes de transmission près, de sorte que l'observateur peut lire clairement les informations I affichées par le dispositif d'affichage inférieur 26.

En revanche, lorsque la cellule 28 et la valve 30 sont dans l'état commuté, le dispositif d'affichage inférieur 26 est masqué. Dans cette configuration illustrée aux figures 3 et 4, la lumière symbolisée par un rayon R2 traverse la cellule 28 en dehors des zones dans lesquelles les électrodes 40 et 42 sont commutées, et est totalement réfléchie sur la surface de la valve 30 qui est alors réfléchissante pour traverser à nouveau la cellule 28 et faire apparaître à l'observateur des caractères alphanumériques 46 (figure 4) en foncé sur fond clair, ces caractères 46 étant définis par les zones de la cellule 28 dans lesquelles les électrodes 40 et 42 sont commutées. On notera que le dispositif d'affichage inférieur 26 est totalement masqué par la valve 30 et n'apparaît par conséquent pas à l'observateur. Toute interférence entre les informations affichées par les dispositifs d'affichage inférieur 26 et supérieur 24 pouvant altérer leur lisibilité est ainsi évitée.

On notera également que la cellule 28 selon l'invention fonctionne en mode réflectif en utilisant la valve 30 comme réflecteur qui, de part sa proximité avec la cellule 28, permet l'affichage d'informations avec un contraste amélioré.

Lorsque la cellule 28 est dans un état non commuté et que la valve 30 est dans un état commuté, aucune information n'est affichée par la cellule 28 et le dispositif d'affichage inférieur 26 est masqué par la valve 30 comme cela vient d'être décrit ci-dessus. Dans cette configuration non représentée au dessin, la montre 1 n'affiche aucune information.

Lorsque la cellule 28 est dans un état commuté et que la valve 30 est dans un état non commuté, les informations affichées par les dispositifs d'affichage inférieur 26 et supérieur 24 sont visibles. Dans cette configuration représentée à la figure 5, la montre 1 affiche en superposition des informations respectivement du dispositif d'affichage supérieur 24 et inférieur 26.

La commutation de la cellule 28 et de la valve 30 peut être réalisée de façon classique par exemple par l'intermédiaire d'interrupteurs commandés par un ou plusieurs poussoirs (non représentés au dessin), chaque actionnement d'un poussoir provoquant la commutation d'un état de commutation à un autre de la cellule auquel il est associé.

## Revendications

1. Ensemble d'affichage comprenant deux dispositifs d'affichage superposés respectivement supérieur (24) et inférieur (26), **caractérisé en ce que** le dispositif d'affichage supérieur (24) comprend une double structure formée d'une cellule d'affichage (28) disposée au-dessus d'une valve optique (30), ladite double structure étant agencée pour que ladite cellule (28) et ladite valve (30) soient transparentes dans un premier état pour rendre visible le dispositif d'affichage inférieur (26), et pour que la cellule (28) affiche une information et que la valve (30) soit opaque et masque au moins partiellement le dispositif d'affichage inférieur (26) dans un deuxième état, des moyens de commande fournissant une tension de commande à la cellule (28) et à la valve (30) pour les faire passer du premier état au deuxième état et inversement.

2. Ensemble d'affichage selon la revendication 1, **caractérisé en ce que** la cellule (28) et la valve optique (30) sont dans le premier état transparent en l'absence de tension appliquée par lesdits moyens de commande.

3. Ensemble d'affichage selon l'une quelconque des revendications 1 ou 2, **caractérisé en ce que** ladite cellule d'affichage (28) est une cellule à cristaux liquides choisie parmi les cellules du type nématique en hélice TN, STN, Guest-Host, à biréfringence contrôlée électriquement (BCE), à gel nématique et texture cholestérique, ferroélectrique, à cristaux liquides dispersés dans un polymère.

4. Ensemble d'affichage selon l'une quelconque des revendications précédentes, **caractérisé en ce que** la valve optique (30) est formée d'une cellule du type nématique en hélice (47), d'un polariseur linéaire (46) placé devant la cellule (47), d'une lame quart d'onde (48) et d'un film cholestérique (50) ayant un premier sens d'hélice placés successivement derrière la cellule (47).

5. Ensemble d'affichage selon la revendication 4, **caractérisé en ce que** le dispositif d'affichage supérieur (24) ou inférieur (26) comprend en outre une deuxième lame quart d'onde (52), et **en ce que** le dispositif d'affichage inférieur (26) comprend un réflecteur métallique placé derrière la deuxième lame quart d'onde (52).

6. Ensemble d'affichage selon la revendication 4, **caractérisé en ce que** le dispositif d'affichage inférieur (26) comprend un miroir cholestérique ayant un sens d'hélice inverse de celui dudit film cholestérique (50).

7. Ensemble d'affichage selon la revendication 4, **caractérisé en ce que** le dispositif d'affichage inférieur (26) comprend en outre une lame demi onde et un deuxième film cholestérique (58) Identique au premier.

8. Ensemble d'affichage selon la revendication 4, **caractérisé en ce que** le film cholestérique (50) est choisi pour réfléchir une longueur d'onde ou une partie du spectre visible correspondant à une couleur prédéterminée.

9. Ensemble d'affichage selon l'une quelconque des revendications 4 à 8, **caractérisé en ce que** la cellule (28) comprend, du côté de la glace (22), un polariseur linéaire (60) et, du côté du cadran (18), un polariseur réflectif (62), associé ou non à un polariseur linéaire (64) placé devant celui-ci.

10. Ensemble d'affichage selon la revendication 9. **caractérisé en ce que** la cellule d'affichage (28) et la valve optique (30) sont des cellules à cristaux liquides du type nématique en hélice à anisotrople positive, ladite cellule (28) étant placée entre deux polariseurs linéaires (60, 64) croisés, et ladite valve (30) étant associée à un polariseur réflectif (62) orienté de façon à ce que son axe de polarisation soit perpendiculaire à l'axe de polarisation du polariseur linéaire (64) placé devant lui.

11. Ensemble d'affichage selon la revendication 9, **caractérisé en ce que** la cellule d'affichage (28) et la valve optique (30) sont constituées chacune par une cellule à cristaux liquides du type nématique en hélice à anisotropie négative munie, et **en ce que** les polariseurs linéaires (60, 64) et le polariseur réflectif (62) sont orientés de façon à avoir leurs axes de polarisation parallèles.

12. Ensemble d'affichage selon l'une quelconque des revendications 10 ou 11, **caractérisé en ce** l'adressage de la cellule (28) est normal.

13. Ensemble d'affichage selon l'une quelconque des revendications 10 ou 11, **caractérisé en ce que** l'adressage de la cellule (28) est inverse.

14. Ensemble d'affichage selon l'une quelconque des revendications 1 à 3, **caractérisé en ce que** la valve optique (30) est formée d'une cellule électrolytique.

15. Ensemble d'affichage selon l'une quelconque des revendications 1 à 3, **caractérisé en ce que** la valve optique (30) est formée d'une cellule électrocapillaire au mercure.

16. Ensemble d'affichage selon l'une quelconque des revendications 1 à 3, dans lequel la cellule (28) est du type diffusant à l'état commuté, et dans lequel la valve optique (30) est formée d'une cellule présentant un état transparent à l'état non commuté et opaque ou absorbant dans l'état commuté.

17. Ensemble d'affichage selon la revendication 14, dans lequel la cellule (28) est du type PDLC inverse, à gel nématique ou à diffusion dynamique et dans lequel la valve (30) est du type TN, STN, Guest-Host, à biréfringence contrôlée électriquement (BCE), ferroélectrique, ou du type PSCT.

18. Ensemble d'affichage selon l'une quelconque des revendications 1 ou 2, **caractérisé en ce que** la valve optique (30) est dans le premier état en l'absence de tension appliquée par lesdits moyens de commande, et **en ce que** la valve optique (30) est formée d'un film cholestérique commutable.

19. Ensemble d'affichage selon l'une quelconque des revendications précédentes, **caractérisé en ce que** le dispositif d'affichage inférieur (26) est un dispositif d'affichage choisi parmi l'ensemble comprenant un dispositif analogique, numérique, une combinaison de ces derniers, et un élément décoratif.

20. Pièce d'horlogerie comprenant une boîte (2) fermée par une glace (22) et un fond (4) et dans laquelle est logé un mouvement d'horlogerie (6) associé à un dispositif d'affichage de grandeurs temporelles, **caractérisée en ce qu'**elle comprend un ensemble d'affichage selon l'une quelconque des revendications 1 à 19, ledit dispositif affichage inférieur (26) étant formé par ledit dispositif d'affichage de grandeurs temporelles, et ledit dispositif d'affichage supérieur (24) s'étendant entre la glace (22) et ledit dispositif d'affichage de grandeurs temporelles.

21. Pièce d'horlogerie selon la revendication 20, **caractérisée en ce que** ledit dispositif d'affichage de grandeurs temporelles comprend un cadran (18) et une aiguille des heures (16) et une aiguille des minutes (24) qui se déplacent au dessus du cadran (18).

22. Pièce d'horlogerie selon l'une quelconque des revendications 20 ou 21, **caractérisée en ce que** la glace (22) est formée par le dispositif d'affichage supérieur (24).

## Claims

1. Display assembly including two superposed, respectively upper (24) and lower (26) display devices, **characterized in that** the upper display device (24) includes a double structure formed of a display cell (28) arranged above an optical valve (30), said double structure being arranged so that said cell (28) and said valve (30) are transparent in a first state to make the lower display device visible (26), and that the cell (28) displays an item of data and that the valve (30) is opaque and masks at least partially the lower display device (26) in a second state, control means being provided for supplying a control voltage to the cell (28) and the optical valve (30) to cause them to switch from the first state to the second state and vice versa.

2. Display assembly according to claim 1, **characterized in that** the cell (28) and the optical valve (30) are in the first transparent state in the absence of any voltage applied by said control means.

3. Display assembly according to either of claims 1 or 2 **characterized in that** said display cell (28) is a liquid crystal cell selected from cells of the following types: twisted nematic TN, STN, Guest-Host, electrically controlled birefringence (ECB), nematic gel and cholesteric texture, ferroelectric, polymer dispersed liquid crystal.

4. Display assembly according to any one of the preceding claims, **characterized in that** the optical valve (30) is formed of a twisted nematic cell (47), a linear polariser (46) placed in front of the cell (47), a quarter-wave plate (48) and a cholesteric film (50) having a first helical direction placed in succession behind the cell (47).

5. Display assembly according to claim 4, **characterized in that** the upper display device (24) or lower display device (26) further includes a second quarter-wave plate (52), and **in that** the lower display device (26) includes a metal reflector placed behind the second quarter-wave plate (52).

6. Display assembly according to claim 4, **characterized in that** the lower display device (26) includes a cholesteric mirror having an opposite helical direction to that of said cholesteric film (50).

7. Display assembly according to claim 4, **characterized in that** the lower display device (26) further includes a half-wave plate and a second cholesteric film (58) which is identical to the first.

8. Display assembly according to claim 4, **characterized in that** the cholesteric film (50) is chosen to reflect a wavelength or a portion of the visible spectrum corresponding to a predetermined colour.

9. Display assembly according to any one of claims 4 to 8, **characterized in that** the cell (28) includes, on the side of the crystal (22), a linear polariser (60) and, on the side of the dial (18), a reflective polariser (62), which may or not be associated with a linear polariser (64) placed in front thereof.

10. Display assembly according to claim 9, **characterized in that** the display cell (28) and the optical valve (30) are liquid crystal cells of the positive dielectric anisotropy twisted nematic type, said cell (28) being placed between two crossed linear polarisers (60, 64), and said valve (30) being associated with a reflective polariser (62) oriented so that its axis of polarisation is perpendicular to the axis of polarisation of the linear polariser (64) placed in front thereof.

11. Display assembly according to claim 9, **characterized in that** the display cell (28) and the optical valve (30) are each formed by a liquid crystal cell of the negative anisotropy twisted nematic type, and **in that** the linear polarisers (60, 64) and the reflective polariser (62) are oriented so that their axes of polarisation are parallel.

12. Display assembly according to either of claims 10 or 11, **characterized in that** the addressing of the cell (28) is normal.

13. Display assembly according to either of claims 10 or 11, **characterized in that** the addressing of the cell (28) is reversed.

14. Display assembly according to any one of claims 1 to 3, **characterized in that** the optical valve (30) is formed of an electrolytic cell.

15. Display assembly according to any one of claims 1 to 3, **characterized in that** the optical valve (30) is formed of a mercury electrocapillary cell.

16. Display assembly according to any one of claims 1 to 3, wherein the cell (28) is of the scattering type in the switched state, and wherein the optical valve (30) is formed of a cell having a transparent state in the non switched state and an opaque or absorbent state in the switched state.

17. Display assembly according to claim 14, wherein the LCD cell (28) is of the nematic gel, dynamic scattering or reverse PDLC type and wherein the valve (30) is of the TN, STN, Guest-Host, electrically controlled birefringence (ECB), ferroelectric type or of the PSCT type.

18. Display assembly according to either of claims 1 or 2, **characterized in that** the optical valve (30) is in the first state in the absence of any voltage applied by said control means, and **in that** the optical valve (30) is formed of a switchable cholesteric film.

19. Display assembly according to any one of the preceding claims, **characterized in that** the lower display device (26) is a display device chosen from among the group including an analogue or digital device, or a combination of the latter and a decorative element.

20. Timepiece including a case (2) closed by a crystal (22) and a back cover (4), a clockwork movement (6) being housed in the case, said movement being associated with a display device of time related information, **characterized in that** it includes a display assembly according to any of claims 1 to 19, said lower display device (26) being formed by said display device of time related information and said upper display device (24) extending between the crystal (22) and said display device of time related information.

21. Timepiece according to claim 20, **characterized in that** said display device of time related information includes a dial (18) and an hour hand (16) and a minute hand (24) which move above the dial (18)

22. Timepiece according to either of claims 20 or 21, **characterized in that** the crystal (22) is formed by the upper display device (24).

## Patentansprüche

1. Anzeigeeinheit mit zwei übereinander liegenden Anzeigevorrichtungen, einer oberen (24) und einer unteren (26), **dadurch gekennzeichnet, dass** die obere Anzeigevorrichtung (24) eine Doppelstruktur aufweist, die aus einer Anzeigezelle (28) gebildet ist, welche auf einem optischen Ventil (30) angeordnet ist, wobei die Doppelstruktur vorgesehen ist, damit in einem ersten Zustand die Zelle (28) und das Ventil (30) durchsichtig sind, um die untere Anzeigevorrichtung (26) sichtbar zu machen, und damit in einem zweiten Zustand die Zelle (28) eine Information anzeigt und das Ventil (30) undurchsichtig ist und zumindest teilweise die untere Anzeigevorrichtung (26) verdeckt, wobei Steuermittel eine Steuerspannung für die Zelle (28) und das Ventil (30) bereitstellen, um sie von dem ersten Zustand in den zweiten Zustand zu bringen und umgekehrt.

2. Anzeigeeinheit nach Anspruch 1, **dadurch gekennzeichnet, dass** die Zelle (28) und das optische Ventil (30) in dem ersten Zustand bei Fehlen einer von den Steuermitteln aufgebrachten Spannung durchsichtig sind.

3. Anzeigeeinheit nach einem der Ansprüche 1 oder 2, **dadurch gekennzeichnet, dass** die Anzeigezelle (28) eine Flüssigkristallzelle ist, die unter den Zellen vom Typ nematische Drehzelle TN, STN, Guest-Host, mit elektrisch gesteuerter Doppelbrechung (ECB), nematischem Gel und cholesterischer Textur, ferroelektrische Zelle, mit in einem Polymer verteilten Flüssigkristallen ausgewählt ist.

4. Anzeigeeinheit nach einem der vorangehenden Ansprüche, **dadurch gekennzeichnet, dass** das optische Ventil (30) aus einer Zelle vom Typ nematische Drehzelle (47), einem vor die Zelle (47) gesetzten Linear-Polarisator (46), einer Viertelwellenplatte (48) und einer cholesterischen Folie (50) mit einer ersten Drehrichtung gebildet ist, die nacheinander hinter der Zelle (47) angeordnet sind.

5. Anzeigevorrichtung nach Anspruch 4, **dadurch gekennzeichnet, dass** die obere (24) oder untere (26) Anzeigevorrichtung ferner eine zweite Viertelwellenplatte (52) aufweist und dass die untere Anzeigevorrichtung (26) einen metallischen Reflektor aufweist, der hinter der zweiten Viertelwellenplatte (52) angeordnet ist.

6. Anzeigevorrichtung nach Anspruch 4, **dadurch gekennzeichnet, dass** die untere Anzeigevorrichtung (26) einen cholesterischen Spiegel mit einer Drehrichtung aufweist, die umgekehrt zu der der cholesterischen Folie (50) verläuft.

7. Anzeigevorrichtung nach Anspruch 4, **dadurch gekennzeichnet, dass** die untere Anzeigevorrichtung (26) ferner eine Halbwellenplatte und eine zur ersten identische zweite cholesterische Folie (58) aufweist.

8. Anzeigevorrichtung nach Anspruch 4, **dadurch gekennzeichnet, dass** die cholesterische Folie (50) ausgewählt ist, um eine Wellenlänge bzw. einen Teil des sichtbaren Spektrums zu reflektieren, die/der einer vorbestimmten Farbe entspricht.

9. Anzeigevorrichtung nach einem der Ansprüche 4 bis 8, **dadurch gekennzeichnet, dass** die Zelle (28) auf der Seite des Uhrenglases (22) einen Linear-Polarisator (60) und auf der Seite des Zifferblatts (18) einen reflektiven Polarisator (62) aufweist, der einem vor diesem angeordneten Linear-Polarisator zugeordnet ist oder nicht.

10. Anzeigevorrichtung nach Anspruch 9, **dadurch gekennzeichnet, dass** die Anzeigezelle (28) und das optische Ventil (30) Flüssigkristall-Zellen vom Typ nematische Drehzelle mit positiver Anisotropie sind, wobei die Zelle (28) zwischen zwei gekreuzten Linear-Polarisatoren (60, 64) angeordnet ist und wobei dem Ventil (30) ein reflektiver Polarisator (62) zugeordnet ist, der so ausgerichtet ist, dass seine Polarisationsachse senkrecht zur Polarisationsachse des vor diesem angeordneten Linear-Polarisators (64) verläuft.

11. Anzeigevorrichtung nach Anspruch 9, **dadurch gekennzeichnet, dass** die Anzeigevorrichtung (28) und das optische Ventil (30) jeweils aus einer Flüssigkristall-Zelle vom Typ nematische Drehzelle mit negativer Anisotropie bestehen und dass die Linear-Polarisatoren (60, 64) und der reflektive Polarisator (62) so ausgerichtet sind, dass sie mit ihren Polarisationsachsen parallel verlaufen.

12. Anzeigevorrichtung nach einem der Ansprüche 10 oder 11, **dadurch gekennzeichnet, dass** die Adressierung der Zelle (28) normal ist.

13. Anzeigevorrichtung nach einem der Ansprüche10 oder 11, **dadurch gekennzeichnet, dass** die Adressierung der Zelle (28) umgekehrt ist.

14. Anzeigevorrichtung nach einem der Ansprüche 1 bis 3, **dadurch gekennzeichnet, dass** das optische Ventil (30) aus einer elektrolytischen Zelle gebildet ist.

15. Anzeigevorrichtung nach einem der Ansprüche 1 bis 3, **dadurch gekennzeichnet, dass** das optische Ventil (30) aus einer elektrokapillaren Quecksilberzelle gebildet ist.

16. Anzeigevorrichtung nach einem der Ansprüche 1 bis 3, wobei die Zelle (28) vom im Schaltzustand diffundierenden Typ ist und das optische Ventil (30) aus einer Zelle gebildet ist, die im nicht geschalteten Zustand einen durchsichtigen Zustand und im Schaltzustand einen undurchsichtigen bzw. absorbierenden Zustand aufweist.

17. Anzeigevorrichtung nach Anspruch 14, **dadurch gekennzeichnet, dass** die Zelle (28) vom Typ einer umgekehrten PDLC-Zelle, mit nematischem Gel oder dynamischer Diffusion ist, wobei das Ventil (30) vom Typ TN, STN, Guest-Host, mit elektrisch gesteuerter Doppelbrechung (ECB), ferroelektrisch oder vom Typ PSCT ist.

18. Anzeigevorrichtung nach einem der Ansprüche 1 oder 2, **dadurch gekennzeichnet, dass** das optische Ventil (30) bei Fehlen einer von den Steuermitteln aufgebrachten Spannung sich im ersten Zustand befindet und dass das optische Ventil (30) aus einer schaltbaren cholesterischen Folie gebildet ist.

19. Anzeigevorrichtung nach einem der vorangehenden Ansprüche, **dadurch gekennzeichnet, dass** die untere Anzeigevorrichtung (26) eine Anzeigevorrichtung ist, die aus der Gruppe analoge Vorrichtung, digitale Vorrichtung, eine Kombination dieser beiden, und Zierelement ausgewählt ist.

20. Uhr mit einem Gehäuse (2), das von einem Uhrenglas (22) und einem Boden (4) verschlossen wird und in welchen ein Uhrwerk (6) aufgenommen ist, dem eine Anzeigevorrichtung zum Anzeigen von Zeitgrößen zugeordnet ist, **dadurch gekennzeichnet, dass** sie eine Anzeigeeinheit nach einem der Ansprüche 1 bis 19 aufweist, wobei die untere Anzeigevorrichtung (26) aus der Zeitgrößenanzeigevorrichtung gebildet ist und die obere Anzeigevorrichtung (24) sich zwischen dem Uhrenglas (22) und der Zeitgrößenanzeigevorrichtung erstreckt.

21. Uhr nach Anspruch 20, **dadurch gekennzeichnet, dass** die Zeitgrößenanzeigevorrichtung ein Zifferblatt (18) sowie einen Stundenzeiger (16) und einen Minutenzeiger (24) aufweist, die sich über dem Zifferblatt (18) verlagern.

22. Uhr nach einem der Ansprüche 20 oder 21, **dadurch gekennzeichnet, dass** das Uhrenglas (22) aus der oberen Anzeigevorrichtung (24) gebildet ist.
